# EUROPEAN PATENT SPECIFICATION

(11) **EP 2 352 994 B1**
(45) Date of publication and mention of the grant of the patent: **26.02.2020**
(21) Application number: 09830658.2
(22) Date of filing: 27.11.2009
(51) Int. Cl.: G01N 27/02, G01N 27/22

(54) **RADIO FREQUENCY BASED SENSORS EMPLOYING ANALYTE RECOGNITION ELEMENT**
SENSOREN AUF FUNKFREQUENZBASIS MIT EINEM ANALYTERKENNUNGSELEMENT
CAPTEUR RADIOFRÉQUENCE UTILISANT UN ÉLÉMENT DE RECONNAISSANCE D' ANALYTE

(30) Priority: 01.12.2008 US 325653
(43) Date of publication of application: 10.08.2011
(73) Proprietor: General Electric Company, Schenectady, NY 12345 (US)
(72) Inventor: MORRIS, William, New Jersey 12309 (US); POTYRAILO, Radislav, New York 12309 (US); VENKATARAMANI, Venkat, New Jersey 12309 (US)
(74) Representative: Dennemeyer & Associates S.A.
(86) International application number: PCT/SE2009/051346
(87) International publication number: WO 2010/064976

(56) References cited:
- WO-A2-2004/032191
- WO-A2-2005/010483
- WO-A2-2008/005823
- WO-A2-2008/005823
- WO-A2-2008/005823
- WO-A2-2008/082654
- US-A- 5 306 644
- US-A1- 2007 090 927
- US-A1- 2007 090 927
- US-A1- 2007 176 773
- US-A1- 2008 012 577
- US-A1- 2008 012 579
- US-A1- 2008 142 366
- US-A9- 2005 199 731
- US-B1- 6 359 444
- US-B1- 6 359 444
- Erin Sue Hendrick: "CELLULOSE ACETATE FIBERS WITH FLUORESCING NANOPARTICLES FOR ANTI-COUNTERFEITING PURPOSES", , 1 August 2008 (2008-08-01), XP055300519, Retrieved from the Internet: URL:https://ecommons.cornell.edu/bitstream /handle/1813/11143/Erin Hendrick Thesis.pdf?sequence=1 [retrieved on 2016-09-07]

## Description

### BACKGROUND

The invention relates to sensors, and more particularly to radio frequency based chemical, physical or biological sensors.

Conventionally, radio frequency identification (RFID) tags are used for asset tracking. For example, RFID tags may be used for tracking the removal of objects from a location and the replacement of the objects at the location. The RFID tags have been combined with a biometric reader. Such RFID circuit uses certain functional blocks for processing both the biometric signals and the RFID signals. RFID tags can have unique numbers and can be used to read these identification numbers with information related to the article to which the tag is attached. RFID tags are also used for detecting the unauthorized opening of containers and baggage. RFID tags can be included in a variety of articles such as postage stamps and other mailing labels, garments, and numerous other articles. RFID systems have been recently applied for wireless sensing applications such as RFID-based temperature sensors.

These and other properties of RFID tags can be used to form sensors that can detect chemical, biological and physical species. Prior art is WO2008/005823A2; US2005/199731A9 and US2008/142366A1.

### BRIEF DESCRIPTION

The present invention relates to a radio frequency based sensor according to independent claim 1.

Preferred features are claimed in the dependent claims.

The present invention also relates to a detection system according to claim 10, this system comprising a sample delivery unit, a radio frequency based sensor as claimed in any one of claims 1 to 9 and a display device.

### DRAWINGS

FIG. 1 is a top view of an example of a radio frequency based sensor, in accordance with embodiments of the present technique;
FIG. 2 is a cross-sectional view of a portion of the radio frequency based sensor of FIG. 1;
FIG. 3 is a top view of another example of a radio frequency based sensor, in accordance with embodiments of the present technique;
FIGS. 4-5 are diagrammatical views of radio frequency based sensors employing conformational analyte recognition element, in accordance with embodiments of the present technique;
FIGS. 6-7 are diagrammatical views of radio frequency based sensors employing replaceable signal amplification entity, in accordance with embodiments of the present technique;
FIGS. 8-9 are diagrammatical views of radio frequency based sensors employing replaceable analyte recognition element and signal amplification entity, in accordance with embodiments of the present technique;
FIG. 10 is a diagrammatical view of a signal amplification entity having a core shell structure; and
FIGS. 11-14 are graphical representations of sensor responses for Fp, F1, F2, and Zp parameters for samples of water and water with BaTiO₃.

These and other features, aspects, and advantages of the present invention will become better understood when the following detailed description is read with reference to the accompanying drawings in which like characters represent like parts throughout the drawings, wherein:

### DETAILED DESCRIPTION

Embodiments of the present technique relate to a radio frequency based sensor, comprising a radio frequency identification (RFID) tag having a substrate, where the radio frequency identification tag generates an associated electromagnetic field. The radio frequency based sensor further includes an analyte recognition element in operative association with the substrate, where the analyte recognition element is capable of binding to a target analyte. In certain embodiments, the sensor may include two or more analyte recognition elements. The sensor further includes a signal amplification entity coupled to the analyte recognition element, where the signal amplification entity facilitates the desired change in electromagnetic field in presence of the target analyte.

As used herein, the term "analyte recognition element" refers to natural or artificial receptors configured to bind target analytes such as proteins, cells, drugs, viruses, small molecules, or molecular ions. The analyte recognition element may be developed in-vitro to enable the analyte recognition element to bind target analytes. In one example, the analyte recognition element may include DNA or RNA based sequences. In one embodiment, the analyte recognition element includes an aptamer. Non-limiting examples of aptamers include RNA aptamers, DNA aptamers. In one embodiment, the aptamer may be an engineered aptamer to enhance or initiate/activate processes. In one example, aptamers may have catalytic activities, which combine an enzymatic role with a recognition function, for example.

In conventional sensors, natural receptors such as antibodies and enzymes are used to identify the target analyte. However, aptamers may provide several advantages such as high specificity and affinity towards the target analyte. Also, it may be possible to select aptamers in-vitro for a given target, ranging from small molecules to large proteins and even cells, thus making it possible to develop a wide range of aptamer-based sensors. In addition, aptamers may be synthesized with high reproducibility and purity. A variety of aptamers are available commercially, or may be synthesized using low cost methods. As will be appreciated, aptamers are chemically more stable as compared to protein-based antibodies or enzymes. In addition, capability of aptamers to undergo conformational changes upon target binding offers design flexibility of sensors. The aptamers may be modified to provide chemistry and/or engineering (such as immobilization functionalities).

In certain embodiments, the analyte recognition element may be a conformational element, that is, the analyte recognition element may be configured to change shape upon interaction with a target analyte. In these embodiments, the change of position of the signal amplification entity generates detectable signals.

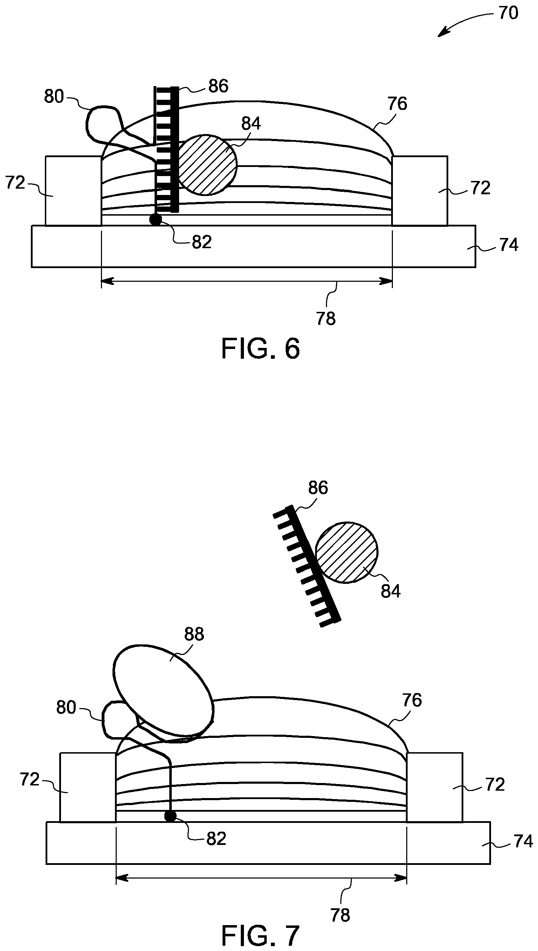

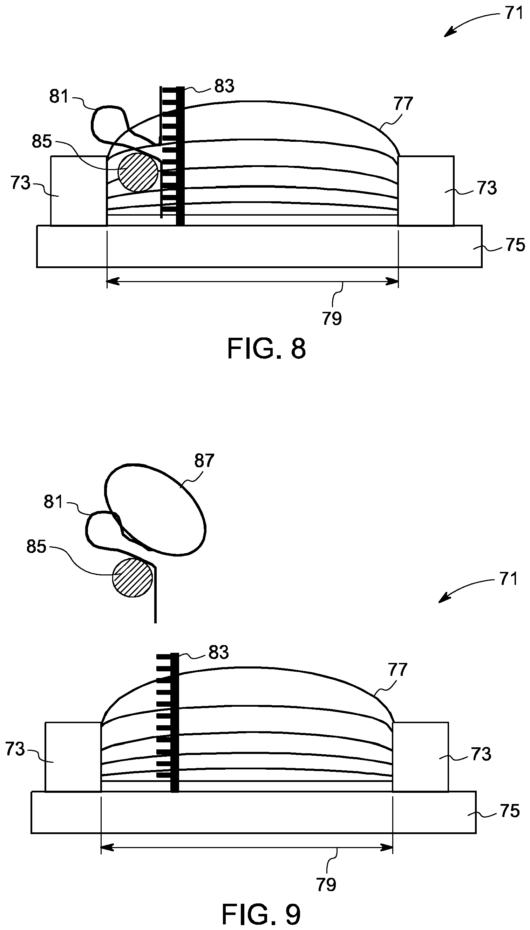

As will be described in detail with regard to FIGS. 6-7, in some embodiments, a partially complementary strand may be coupled to the signal amplification entity and the analyte recognition element. In these embodiments, the partially complementary strand along with the signal amplification entity may be de-coupled from the analyte recognition element when the target analyte binds to the analyte recognition element. As will be described in detail with regard to FIGS. 8-9, in other embodiments, the partially complementary strand may be coupled to the surface of the sensor and the analyte recognition element, and the signal amplification entity may be coupled to the analyte recognition element. In this embodiment, the analyte recognition element along with the signal amplification entity may be de-coupled from the partially complementary strand when a target analyte attaches to the analyte recognition element. In one example, the partially complementary strand may include a nucleic acid and the analyte recognition element may include an aptamer.

In some embodiments, a terminus unit and/or a linker or spacer unit may be used to couple the analyte recognition element to the surface of the sensor. In these embodiments, the terminus unit and/or a linker or spacer unit may be coupled to an end of the analyte recognition element. The terminus unit is used to form the bond with the surface of the sensor, whereas, as evident from the name, the linker unit provides the link between the terminus and the aptamer. Non-limiting example of terminus units may be thiol, amine, biotin, or hydroxyl. In one embodiment, a thiol (-SH) or disulfide (-SSR) terminus may be employed along with a linker, and an aptamer. In one example, the thiol-based terminus may be employed for planar gold plated surfaces, and, the disulfide-based terminus may be employed in the presence of gold nanoparticles on the surface. In other embodiments, the sensor may include a functional group coupled to an end of the analyte recognition element. In these embodiments, the functional group may facilitate bonding of the analyte recognition element with a surface of the substrate.

As will be appreciated, the choice of the surface of the substrate may be governed by the design of the sensor. Nonlimiting examples of sensor substrates are glass, quartz, silica, silicon, high-resistance silicon, a polymer, kapton, liquid crystal polymer, polyethylene terephthalate polymer, metal oxide, titanium oxide (TiO2), alumina (Al₂O₃), photoresist, photopolymer, and any other substrates. These substrates can be further modified with thin overlayer coatings to better surface attachment of analyte recognition element and for better performance of sensor in highly conductive fluids. Non-limiting examples of overlayer coatings to enhance surface attachment of analyte recognition element include silicon oxide, thiol coatings, and others. Non-limiting examples of overlayer coatings for enhanced performance of sensor in highly conductive fluids may include photopolymers, silicon oxide, thiol coatings, and others.

In certain embodiments, a wide variety of commercially available RFID tags may be applied for the radio frequency based sensors. These tags operate at different frequencies ranging from about 125 kHz to about 2.4 GHz, and up to about 5.8 GHz. Suitable tags are available from different suppliers and distributors, such as Texas Instruments, TagSys, Digi Key, Fujitsu, Amtel, Hitachi and others. Suitable tags can operate in passive, semi-passive and active modes. The passive RFID tag does not need a power source (for example, a battery) for operation, while the semi-passive and active RFID tags rely on the use of onboard power for their operation. RFID tag has a digital ID and the frequency response of the antenna circuit of the RFID tag can be measured as the complex impedance with real and imaginary parts of the complex impedance. A sensing or a protecting film is applied onto the tag and the complex impedance is measured as a function of environment in proximity to the resulting sensor. Such sensor is fabricated as described in U.S. Patent Application, Serial No. 11/259,710 entitled "Chemical and biological sensors, systems and methods based on radio frequency identification" and U.S. Patent Application, Serial No. 11/259,711.

Also, the RFID tag may be a transponder, which is an automatic device that receives, amplifies and retransmits a signal on a different frequency. Further, the RFID tag may be another type of transponder that transmits a predetermined message in response to a predefined received signal. This RFID tag may comprise, but is not limited to, one or more of the tags disclosed in U.S. Patent Applications, Serial No. 11/259,710, entitled "Modified RF Tags and their Applications for Multiplexed Detection" filed on October 26, 2005 and U.S. Patent Application Serial No. 11/259,711, entitled "Multivariate Methods of Chemical and Biological Detection Using Radio-Frequency Identification Tags" filed on October 26, 2005, which are hereby incorporated by reference. In one embodiment, the tag has an analog input into a memory chip associated with the tag. In another embodiment, the tag does not have an associated memory chip. In this embodiment, the sensor may be fabricated using similar fabrication techniques as that used for sensor having the memory chip. In one embodiment, a separate chemical, biological or physical sensor is connected to the analog input of the memory chip of RFID tag. In another embodiment, at least one chemical, biological or physical sensor is an integral part of the memory chip of the RFID tag where the sensor part of the tag was fabricated during the fabrication process of the memory chip itself. Memory chips of RFID tags are fabricated using known integrated circuit fabrication processes and organic electronic fabrication processes. RFID tag may include a memory chip and an antenna. The antenna is comprised of electrodes. In one example, the antenna is formed as a planar coil with concentric electrodes.

The RFID tag is capable of producing detectable electrical signals, for example, change in resistance, change in capacitance, or change in impedance, or combinations thereof that is representative of a target analyte binding to the analyte recognition element. In cases where an aptamer is employed as an analyte recognition element, the aptamer may be immobilized onto the sensing region for integration of the sensor. In one example, the aptamer may be covalently linked to the surface of the sensing region.

In certain embodiments, the associated electromagnetic field of the RFID tag is mostly generated between concentric electrodes. The gap disposed between electrodes is defined as the sensing region. The electrodes are part of the antenna . In certain embodiments, the analyte recognition element may be coupled to a portion of the RFID tag such that the analyte recognition element is disposed in close proximity to the pair of electrodes, or in the sensing region defined by the pair of electrodes. In one embodiment, the pair of electrodes is disposed on the substrate of the RFID tag and is coupled to the antenna of the RFID tag. In another embodiment, a portion of the antenna is configured to act as the pair of electrodes. Non-limiting examples of electrodes may include interdigitated electrodes, or electrode coils. In certain embodiments, the spacing between the electrodes may be in a range from about 1 micrometer to about 1000 micrometers. In these embodiments, the electrodes may include micro-scale electrode features. As used herein, the term "electrode features" refer to dimensions of the electrodes, or to any other formation or structure present on the electrode. In some embodiments where the electrodes may include nanoscale electrode features, the spacing between the electrodes may be in a range from about 1 nanometer to about 1000 nanometers.

In one embodiment, the first electrode, or the second electrode, or both may have a continuous surface. For example, the first or second electrode may be a continuous electrically conducting line that forms a rectangle, a square, a circle, or any other geometric shape. In another embodiment, the first and/or second electrodes may have a discontinuous surface. For example, the first or second electrode may have a patterned surface, such as grid, a surface having holes, wherein the holes may or may not be through holes, a surface having protruding structures, or combinations thereof. Further, the first and second electrodes may have same or different kinds of surfaces. The electrodes may be formed of electrode material that is capable of transporting electrical current with determined electrical properties. Non-limiting examples of electrode materials include metals such as copper, aluminum, gold, silver, and others; metal alloys, such as alloys of copper (e.g. brasses, bronzes), alloys of aluminum, alloys of gold, doped conducting polymers (e.g. polyacetylene, polyaniline, polythiophene); carbon nanotubes, carbon particles, conducting inks, and any others.

In one embodiment, the resistance of the antenna structures may be in a range from about 0.5 Ohms to less than 100 Ohms. In one embodiment, the electrical resistance of the electrode material is less than about 100 ohms. In another embodiment, the electrical resistance of the electrode material is less than about 50 ohms, or less than about 0.5 ohms. In certain embodiments, the gap is substantially free of the electrode material. The gap may include sensing materials for detection of chemical, biological, and/or physical changes around the gap sensor. In one embodiment, the sensing material may be coated on the sensing region. In another embodiment, the sensing material may be in the vicinity of the sensing region, for example, when it is added to the sample, or is originally in the sample.

In certain embodiments, the binding surface, that is the surface of the analyte recognition element to which the target analyte binds, may be regenerated, that is, the target analyte may be partially or completely removed from the binding surface. It is desired that the regeneration perturbs only the bonding between the target analyte and the analyte recognition element, without degrading the analyte recognition element. Regeneration may be achieved by changing the temperature of the detection medium, employing concentrated salt solutions, varying the pH of the medium, for example changing the medium from acidic to basic, or vice versa, employing chaotropic reagents such as but not limited to, urea or guanidinium hydrochloride, employing surfactants such as but not limited to, sodium dodecyl sulfate, employing chelating agents such as EDTA, or a combination of two or more of the above mentioned regenerating agents or systems.

In certain embodiments, when the signal amplification entity interacts with the electric field of the electrodes, the change in the position of the signal amplification entity produces detectable sensor signal. Thus, the signal amplification entity may be chosen such that the permittivity or dielectric constant of the signal amplification entity is substantially different from that of the detection medium. This difference in the dielectric constants of the signal amplification entity and the detection medium enhances the electrical signal produced by the sensor. The dielectric constant of the signal amplification entity may be either less or more than the dielectric constant of the detection medium. As used herein, the term detection medium refers to a medium having the target analyte; the radio frequency based sensor may or may not be disposed in the detection medium. In one embodiment, the dielectric constant of the signal amplification entity may be less than about 10 times the dielectric constant of a detection medium. Whereas, in other embodiments, the dielectric constant of the signal amplification entity may be more than about 10 times the dielectric constant of the detection medium.

In certain embodiments, a size of the signal amplification entity may be in a range from about 0.1 nanometer to about 10,000 nanometers. the signal amplification entity includes a nanoparticle, a nanotag, a perovskite, a metallic particle, a metallic nanoparticle, a polymer particle, a quantum dot, a nanodevice, a core shell structure, or combinations thereof. Non-limiting examples of the perovskite may include BaTiO₃, BaTiSnO₃, Cu₃Ti₄O₁₂, or Ca₂Nb₄O₁₂, or combinations thereof. In one embodiment, nanoparticles of pervoskites may be employed as signal amplification entity. In one embodiment, the nanodevice may include one or more of a nanocantilever, nano field-effect transistors, and the like. In other embodiments, the signal amplification entity may include a core-shell structure. In one embodiment, the core-shell structure may include core of iron oxide material, coated with silane. In one embodiment, the signal amplification entity may include a polymeric material. For example, the nanotag may include a polymeric nanosphere. As will be appreciated, polymeric materials, such as, polystyrene, have low dielectric constant of about 2.5 as compared to a commonly employed detection medium, such as water, which has a dielectric constant of about 80. Also, the polymeric material particles may be available in different sizes. For example, the polymeric particles having a size in a range from about 15 nanometers to about 50 nanometers may be employed in the sensor. Whereas, larger polymeric particles having a size or more than about 50 nanometers may employ functional groups, such as but not limited to, carboxylated aminated with one or more of a avidin, streptavidin, or biotin.

In certain embodiments, the signal amplification entity includes a core shell structure. In these embodiments, the shell enables reduction in the growth of defects on the surface of the core. Further, the shell may help stabilize the crystalline structure and surface purity of the core material. The contaminated surface of the core may lead to the increase of the loss component of the dielectric property of the signal amplification entity. In one embodiment, the sensor may include a sensing material that contains a core shell structure where the core and the shell have different dielectric constants.

Non-limiting examples of materials employed in the core may include perovskites such as BaTiO₃, BaTiSnO₃, Cu₃Ti₄O₁₂, Ca₂Nb₄O₁₂, or combinations thereof. In one embodiment, the diameter of the core may be in a range from about 1 nanometer to about 100,000 nanometers. In another embodiment, the diameter of the core may be in a range from about 2 nanometers to about 50,000 nanometers. In another embodiment, the diameter of the core may be in a range from about 3 nanometers to about 20,000 nanometers.

Non-limiting examples of a shell material may include silicates, phosphates, organic polymers, inorganic polymers, or combinations thereof. The thickness of the shell may be in a range from about 1 monolayer to about 10,000 monolayers. In another embodiment, the thickness of the shell may be in a range from about 2 monolayers to about 5,000 monolayers. In another embodiment, the thickness of the shell may be in a range from about 2 monolayers to about 2,000 monolayers.

In one embodiment, the shell is formed on the surface of the core particle by using a liquid precursor, where the precursor is further precipitated onto the surface of the core of particle.

In one embodiment, the core shell particle has a core with high dielectric constant. For example, the core may be made of a semiconducting ferroelectric material, such as but not limited to, SrTi₁₋ₓCu_{y}WₓO₃, where 1<x<0 and 1<y<0. In one embodiment, x and y may may be in a range from about 0.0001 atomic percent to about 0.099 atomic percent. In another embodiment, x and y may be in a range from about 0.001 atomic percent to about 0.05 atomic percent. In one embodiment, the shell of the particle has a high dielectric constant. For example, the shell may be made of a material, such as but not limited to, SrTi₁₋₂ₓ(CuₓWₓ)O₃ material. In one embodiment, the combination of copper and tungsten may be partially or completely replaced by a combination of copper and niobium, or copper and tantalum. In one embodiment, 0.001 ≤ x ≤ 0.10. In another embodiment, 0.005 ≤ x ≤ 0.05.

In one embodiment, the signal amplification entity may be bound to the surface of the molecular recognition element. In one embodiment, the analyte recognition element may have one or more functional groups that facilitate attaching of the analyte recognition element to the signal amplification entity. Non-limiting examples of such functional groups may include thiol, amine, and biotin groups.

In one embodiment, the surface of the sensor may be metallic or polymeric. In another embodiment, the surface of the sensor may include a silicate, or a silicone. The signal amplification entity may be covalently attached to the analyte recognition element. For example, the covalent attachment may be performed by having a functional group on an end of the signal amplification entity and having a matching functional group on the analyte recognition element. Covalent attachment of the signal analyte recognition elements may be done using standard chemical methods previously developed for attachment of biomolecules, for example nucleic acids for hybridization detection. For example, signal amplification entity that has a biotin functional group on its surface may be attached to the analyte recognition element, when the analyte recognition element has an avidin or one of its derivatives.

In one example, where the detection medium is an aqueous medium, that is the dielectric constant (ε) of the medium is about 80, the signal amplification entity may have a dielectric constant (ε) in a range from about 800 to about 10,000. Non-limiting examples of nanoparticles that may be employed as signal amplification entity having a dielectric constant in a range from about 1,000 to about 10,000 include perovskites such as BaTiO₃, BaTiSnO₃, Cu₃Ti₄O₁₂, Ca₂Nb₄O₁₂, or combinations thereof. Alternatively, materials having relatively lower dielectric constant than water may also be employed as signal amplification entity. Examples of such signal amplification entity includes polymeric nanospheres such as polystyrene nanospheres which has a dielectric constant (ε) of about 2.5.

In one example, where the detection medium is air medium, that is the dielectric constant (ε) of the medium is about 1, the signal amplification entity may have a dielectric constant (ε) in a range from about 800 to about 10,000. Non-limiting examples of nanoparticles that may be employed as signal amplification entity having a dielectric constant in a range from about 1,000 to about 10,000 include perovskites such as BaTiO₃, BaTiSnO₃, Cu₃Ti₄O₁₂, Ca₂Nb₄O₁₂, or combinations thereof Operation of sensor in air provides an improved performance because of the larger difference between the dielectric constants between air and the signal amplification entity as compared to the difference between the dielectric constants between water and the signal amplification entity. Non-limiting examples of such operation in air is provided by drying of the sensor after analyte recognition.

In embodiments where the signal amplification entity has a higher dielectric constant in a range from about 100 to about 10000, the size of the signal amplification entity may be in a range from about 5 nanometers to about 30 nanometers. Non-limiting examples of signal amplification entity having a dielectric constant in a range from about 100 to about 10000, and that may be available in the size range of about 5 nanometers to about 30 nanometers may include perovskite nanoparticles, titanium dioxide. Such nanoparticles are commercially available with diverse functional surfaces (such as amino, carboxyl).

In some embodiments, the signal amplification entity may be replaceably coupled to the analyte recognition element. That is, the signal amplification entity coupled to the analyte recognition element may be de-coupled from the analyte recognition element when a target analyte approaches the analyte recognition element and subsequently, the target analyte may replace the signal amplification entity from the analyte recognition element. In other embodiments, the signal amplification entity may be replaceably coupled to a partially complementary strand of an analyte recognition element. That is, the signal amplification entity coupled to the partially complementary strand may be de-coupled from the analyte recognition element when a target analyte approaches the analyte recognition element and subsequently, the target analyte may replace the signal amplification entity from the analyte recognition element as shown in Figures 6 and 7

In certain embodiments, the radio frequency based sensor may include a sensing material or a sensing film disposed on the radio frequency based sensor. As used herein, the term "sensing material and sensing film" refers to materials deposited onto the sensor and perform the function of predictably and reproducibly affecting the sensor response upon interaction with the environment. Examples of sensing materials may include, nanowires, nanofibers, nanoparticles, materials with functional additives, doped conjugated polymers, inorganic materials, organic materials, polymeric materials, biological materials, living cells, biological molecule receptors, antibodies, nucleic acids, aptamers, and any other known sensing materials and their combinations that produce detectable change in resistance, inductance, and/or capacitance upon chemical, biological, and/or physical changes around the gap sensor. In one embodiment, the sensing material may be coated on the sensing region. In another embodiment, the sensing material may be in the vicinity of the sensing region, for example, when it is added to the sample, or is originally in the sample. The typical sensor film may include a polymer, organic, inorganic, biological, composite, or nano-composite film that changes its electrical property based on the solution that it is placed in. The sensor film may be, but is not limited to, a hydrogel such as poly(2-hydroxyethyl methacrylate), a sulfonated polymer such as Nafion, an adhesive polymer such as silicone adhesive, an inorganic film such as sol-gel film, a composite film such as carbon black-polyisobutylene film, a nanocomposite film such as carbon nanotube-Nafion film, gold nanoparticle-hydrogel film, electrospun polymer nanofibers, metal nanoparticle hydrogen film electrospun inorganic nanofibers, electrospun composite nanofibers, and any other sensor material.

In certain embodiments, the radio frequency based sensor may be employed in a detection system. The detection system may include a sample delivery unit for delivering a sample to the radio frequency based sensor, and a display device, such as a monitor, for displaying the electrical signal representative of a binding event.

The radio frequency based sensor of the present technique may be used in applications such as detection of proteins, enzymes (such as thrombin, iysozyme), peptides, antibiotics, oligopeptides, microbes, spores, viruses, molecules or molecular ions. In one embodiment, the sensor may be employed in applications requiring inspection of a patient's blood stream for detection of disease. The sensor may also be employed for early detection of disease that requires detection of minute amounts of diseases related proteins, or peptides, and other molecules. The sensor may also be employed in multianalyte detection of biomarkers, for example. Non-limiting examples of biomarkers may include proteins and DNAs. The sensor may be used for monitoring ambient air, potable water, industrial water, environmental natural reservoirs.

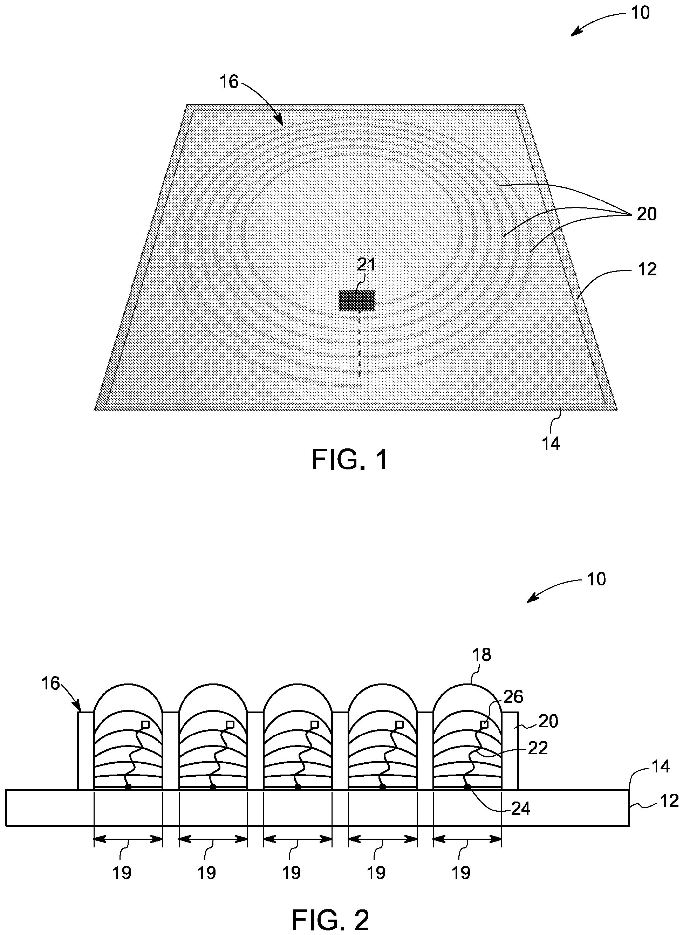

Referring now to FIG. 1, a radio frequency based sensor 10 is illustrated. FIG. 2 is an enlarged version of a projection of a right or left half of the portion of the sensor 10 of FIG. 1. The sensor 10 employs a radio frequency identification tag 12 having a substrate 14, an antenna 16, and a memory chip 21. In the illustrated embodiment, the antenna 16 is formed as a planar coil with concentric electrodes 20. Further, the radio frequency identification tag 12 includes an associated electromagnetic field 18 formed between each of the pair of concentric electrodes 20. Further, the space between the pair of electrodes 20 defines sensing regions 19. Analyte recognition elements 22 may be present in the sensing regions 19 and may be in operative association with the substrate 14. The analyte recognition elements 22 are capable of binding to a target analyte. In the illustrated embodiment, the analyte recognition elements 22 are coupled to the substrate 14 via functional groups 24 present at one end of the analyte recognition elements 22. Further, each of the analyte recognition elements 22 have a signal amplification entity 26 coupled at the other end. Although not illustrated, the substrate 14 may include a sensing film disposed thereon.

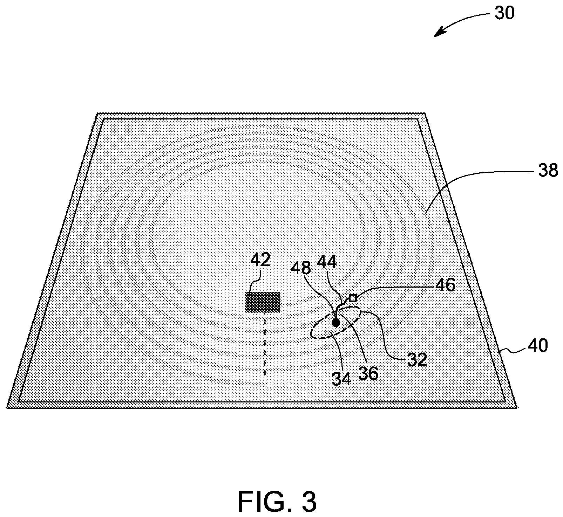

In the illustrated embodiment of FIG. 3, the radio frequency based sensor 30 includes a sensing region 32. As illustrated, a portion of adjacent windings 34 and 36 of the antenna 38 of the RFID tag 40 may be configured to act as the pair of electrodes to define the sensing region 32. The RFID tag 40 further includes a memory chip 42. The analyte recognition element 44 may be coupled to at least a portion of the sensing region 32 by using a functional group 48. A signal amplification entity 46 in turn may be coupled to the free end of the analyte recognition element 44. Although not illustrated, alternately, the signal amplification entity 46 may be coupled to any other point on the analyte recognition element 44 other than the free end of the analyte recognition element 44.

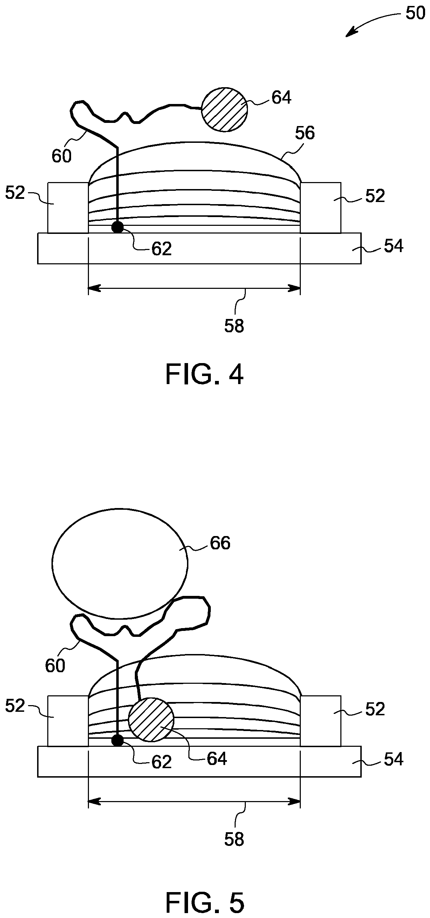

FIG. 4 illustrates a radio frequency based sensor 50 employing a pair of electrodes 52 disposed on a substrate 54 of the RFID tag (not shown). When the pair of electrodes 52 is coupled to a voltage source (not shown), the pair of electrodes 52 produces an electromagnetic field 56 mostly in the sensing region 58 defined by the pair of electrodes 52. Further, an analyte recognition element 60 is coupled to a portion of the sensing region 58 by using a terminal 62, which may be a functional group. A signal amplification entity 64 is also coupled to the analyte recognition element 60. As illustrated in FIG. 5, the analyte recognition element 60 is a conformational element upon receiving the target analyte 66 the analyte recognition element 60 conforms to acquire a different shape. The change in position of the signal amplification entity 64 cause by to the conformation of the molecular recognition 60 element produces a detectable electrical signal.

FIGS. 6-7 illustrate an alternate approach of binding a target analyte to an analyte recognition element. In the illustrated embodiment of FIG. 6, the sensor 70 employs a pair of electrodes 72 on a substrate 74 of a RFID tag. The pair of electrodes 72 is responsible for producing an electromagnetic field 76 in the sensing region 78. A molecular recognition element 80 is coupled to the sensing region 78 via a terminal group 82. Further, the analyte recognition element 80 is coupled to a signal amplification entity 84 using a complementary strand 86. As illustrated in FIG. 7, the complementary strand 86 along with the signal amplification entity 84 is replaced by the target analyte 88. The disappearance of the signal amplification entity 84 produces a detectable electrical signal implying the bonding of the target analyte to the molecular recognition element 80. As used herein, the term "disappearance" refers to removal of the respective moieties by known methods, for example, by applying a washing step.

FIGS. 8-9 illustrate an alternate approach of binding a target analyte to an analyte recognition element. In the illustrated embodiment of FIG. 8, the sensor 71 employs a pair of electrodes 73 on a substrate 75 of a RFID tag. The pair of electrodes 73 is responsible for producing an electromagnetic field 77 in the sensing region 79. An analyte recognition element 81 is coupled to the sensing region 79 via a partially complementary strand 83. Further, the analyte recognition element 81 is coupled to a signal amplification entity 85. As illustrated in FIG. 9, when a target analyte 87 binds with the analyte recognition element 81 the analyte recognition element 81 along with the signal amplification entity 85 is de-coupled from the partially complementary strand 83. The disappearance of the analyte recognition element 81 and the signal amplification entity 85 produces a detectable electrical signal implying the bonding of the target analyte to the analyte recognition element 81.

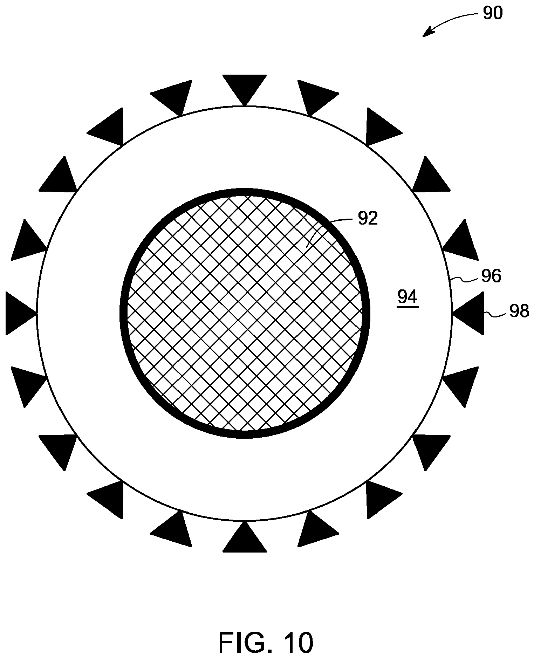

FIG. 10 illustrates an example of a signal amplification entity having a core shell structure 90. In the illustrated embodiment, the core 92 is surrounded by a shell 94. The core 92 may be made of a single material or may include more than one material. The shell 94 surrounds the core 92 such that the core is not exposed to the sample. The material of the core 92 and the shell 94 may have different dielectric constants. Either of the core 92 or the shell 94 may have a higher dielectric constant than the other. Analyte recognition elements 98 are attached to the surface 96 of the core shell structure 90, which is the signal amplification entity. The signal amplification entity 90 may be covalently attached to the analyte recognition element 98. For example, the covalent attachment may be performed by having a functional group on an end of the signal amplification entity and having a matching functional group on the analyte recognition element 98. Covalent attachment of the analyte recognition elements may be done using standard chemical methods previously developed for attachment of biomolecules, for example nucleic acids for hybridization detection. For example, signal amplification entity 90 that has a biotin functional group on its surface may be attached to the analyte recognition element, when the analyte recognition element has an avidin or one of its derivatives. Non-limiting examples of the functional groups on analyte recognition elements that that facilitate attaching of the analyte recognition elements to the signal amplification entity include thiol, amine, and biotin groups.

### Example

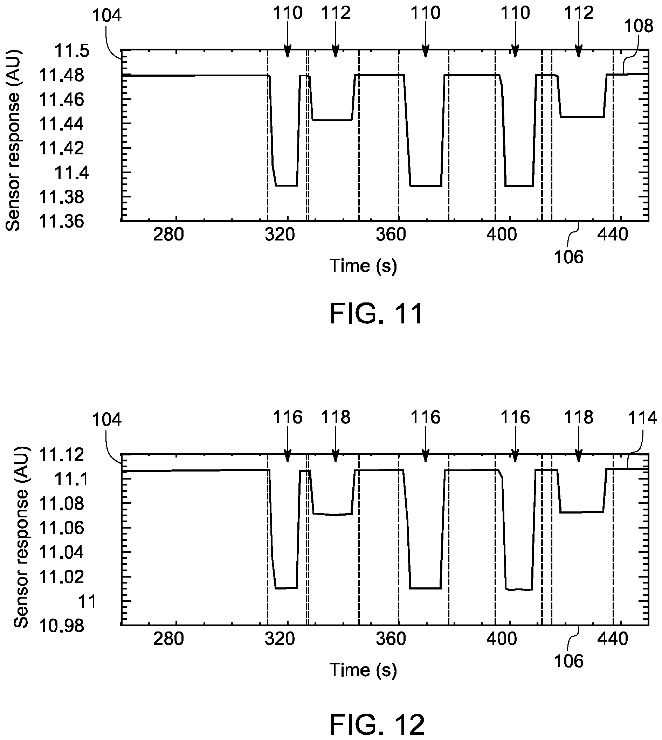

An RFID sensor was fabricated using a Texas Instruments RFID tag. Measurements of the complex impedance of the radio frequency based sensor were performed with a network analyzer (Model E5062A, Agilent Technologies, Inc. Santa Clara, CA) under computer control using LabVIEW. The network analyzer was used to scan the frequencies over the range of interest and to collect the complex impedance response from the RFID sensors. Two samples were available for testing of RFID sensor response. One sample was about 3 cm³ of tap water in a 20-mL glass vial. Another sample was about 3 cm³ of BaTiO₃ with an average nanoparticle size of 200 nm and a dielectric constant (ε) of 1000. This sample was also in a 20-mL glass vial. FIGS. 11-14 depict four different kinds of sensor responses (ordinate 104) Fp, F1, F2, and Zp, respectively that are plotted with respect to time (abscissa 106). In FIGS. 11-14 baseline responses 108, 114, 120 and 126, respectively, are obtained from the RFID sensor response in the air.

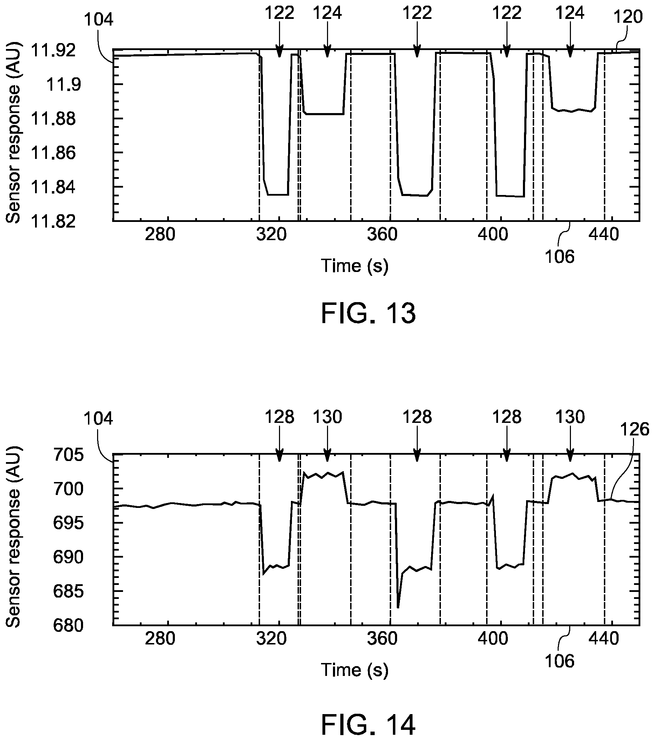

FIG. 11 represents the Fp sensor response, the portions 110 represent sample response of water sample, and the portions 112 represent the sample response of the BaTiO₃ nanoparticles. Similarly, for FIG. 12 representing the F1 sensor response, the portions 116 represent sample response of water sample, and the portions 118 represent the sample response of the BaTiO₃ nanoparticles. FIG. 13 represents the F2 sensor response, the portions 122 represent sample response of water sample, and the portions 124 represent the sample response of the BaTiO₃ nanoparticles. Whereas, in FIG. 14 the Zp sensor response is illustrated, the portions 128 represent sample response of water sample, and the portions 130 represent the sample response of the BaTiO₃ nanoparticles.

## Claims

1. A radio frequency based sensor (10,30,50,07,71) comprising:
a radio frequency identification tag (12,40) having a substrate (14,54,74,75) and the tag being arranged to generate an associated electromagnetic field; and
a molecular analyte recognition element (22,44,60,80,81) coupled with the substrate by means of a functional group, a terminal group or a partially complementary molecular strand, wherein the analyte recognition element is capable of binding to a target analyte; the sensor being **characterised by** the inclusion of:
a signal amplification entity (26,46,64,84,85,90) chemically attached or bound to the analyte recognition element via a molecular strand or directly to the surface of the molecular analyte recognition element, wherein the signal amplification entity is capable of facilitating a change in the generatable electromagnetic field in presence of the target analyte,
the signal amplification entity comprising a nanoparticle, a nanotag, a perovskite particle, a metallic particle, a metallic nanoparticle, a polymer particle, a quantum dot, a nanodevice, or combinations thereof.

2. The radio frequency based sensor of claim 1, wherein the signal amplification entity (26 etc) comprises a nanotag and the size of the nanotag is in a range from about 0.1 nanometer to about 10,000 nanometers.

3. The radio frequency based sensor of claim 1, wherein the signal amplification entity (26 etc) comprises a core-shell structure.

4. The radio frequency based sensor of claim 1, wherein a dielectric constant of the signal amplification entity (26 etc) is less than about 10 times the dielectric constant of a detection medium

5. The radio frequency based sensor of claim 1, wherein a dielectric constant of the signal amplification entity(26 etc) is more than about 10 times the dielectric constant of the detection medium.

6. The radio frequency based sensor of claim 1, wherein the analyte recognition element (22 etc) is an aptamer.

7. The radio frequency based sensor of claim 1, wherein the analyte recognition element (22 etc) is a conformational element that is configured to change shape upon interaction with a target analyte.

8. A radio frequency based sensor as claimed in claim 1 further including :
an antenna (16);
a pair of electrodes (20) disposed on the substrate and in operative association with the antenna, and wherein the pair of electrodes define a sensing region (19); wherein
the analyte recognition element is disposed in use in the electromagnetic field of the pair of electrodes and is capable of producing electrical signals representative of a target analyte binding to the analyte recognition element.

9. The radio frequency based sensor of claim 8, wherein the sensing region comprises sensing material in the form of the analyte recognition element.

10. A detection system, comprising:
a sample delivery unit for delivering a sample;
a radio frequency based sensor as claimed in any one of claims 1 to 9 for producing an electrical signal in response to a binding event for an analyte present in the sample; and
a display device for displaying the electrical signal.

## Patentansprüche

1. Funkfrequenzbasierter Sensor (10, 30, 50, 07, 71), umfassend:
ein Funkfrequenzidentifikationsetikett (12, 40) mit einem Substrat (14, 54, 74, 75), und wobei das Etikett angeordnet ist, um ein zugehöriges elektromagnetisches Feld zu erzeugen; und
ein molekulares Analyterkennungselement (22, 44, 60, 80, 81), das mit dem Substrat mittels einer funktionellen Gruppe, einer Endgruppe oder eines teilweise komplementären Molekülstrangs gekoppelt ist, wobei das Analyterkennungselement in der Lage ist, an einen Zielanalyten zu binden; wobei der Sensor **gekennzeichnet ist durch** den Einschluss von:
einer Signalverstärkungseinheit (26, 46, 64, 84, 85, 90), die chemisch an das Analyterkennungselement über einen Molekülstrang oder direkt an die Oberfläche des molekularen Analyterkennungselements gebunden ist, wobei die Signalverstärkungseinheit in der Lage ist, eine Änderung in dem erzeugbaren elektromagnetischen Feld in bei Vorhandensein des Zielanalyten zu erleichtern,
wobei die Signalverstärkungseinheit ein Nanoteilchen, ein Nano-Tag, ein Perowskitteilchen, ein Metallteilchen, ein Metallnanoteilchen, ein Polymerteilchen, einen Quantenpunkt, eine Nanovorrichtung oder Kombinationen davon umfasst.

2. Funkfrequenzbasierter Sensor nach Anspruch 1, wobei die Signalverstärkungseinheit (26 usw.) ein Nano-Tag umfasst und die Größe des Nano-Tags in einem Bereich von etwa 0,1 Nanometer bis etwa 10.000 Nanometer liegt.

3. Funkfrequenzbasierter Sensor nach Anspruch 1, wobei die Signalverstärkungseinheit (26 usw.) eine Kern-Schale-Struktur umfasst.

4. Funkfrequenzbasierter Sensor nach Anspruch 1, wobei eine Dielektrizitätskonstante der Signalverstärkungseinheit (26 usw.) kleiner als das Zehnfache der Dielektrizitätskonstante eines Detektionsmediums ist.

5. Funkfrequenzbasierter Sensor nach Anspruch 1, wobei eine Dielektrizitätskonstante der Signalverstärkungseinheit (26 usw.) größer als das Zehnfache der Dielektrizitätskonstante eines Detektionsmediums ist.

6. Funkfrequenzbasierter Sensor nach Anspruch 1, wobei das Analyterkennungselement (22 usw.) ein Aptamer ist.

7. Funkfrequenzbasierter Sensor nach Anspruch 1, wobei das Analyterkennungselement (22 usw.) ein Konformationselement ist, das konfiguriert ist, um die Form bei Wechselwirkung mit einem Zielanalyten zu ändern.

8. Funkfrequenzbasierter Sensor nach Anspruch 1, ferner umfassend:
eine Antenne (16);
ein Elektrodenpaar (20), das auf dem Substrat angeordnet ist und mit der Antenne in Wirkverbindung steht, und wobei das Elektrodenpaar einen Erfassungsbereich (19) definiert; wobei
das Analyterkennungselement, bei Verwendung, in dem elektromagnetischen Feld des Elektrodenpaares angeordnet ist und in der Lage ist, elektrische Signale zu erzeugen, die für einen Zielanalyten repräsentativ sind, der an das Analyterkennungselement bindet.

9. Funkfrequenzbasierter Sensor nach Anspruch 8, wobei der Erfassungsbereich Erfassungsmaterial in Form des Analyterkennungselements umfasst.

10. Detektionssystem, umfassend:
eine Probenzufuhreinheit zum Zuführen einer Probe;
einen funkfrequenzbasierten Sensor nach einem der Ansprüche 1 bis 9 zum Erzeugen eines elektrischen Signals als Reaktion auf ein Bindungsereignis für einen in der Probe vorhandenen Analyten; und
eine Anzeigevorrichtung zum Anzeigen des elektrischen Signals.

## Revendications

1. Capteur radiofréquence (10, 30, 50, 07, 71) comprenant :
une étiquette d'identification par radiofréquence (12, 40) comprenant un substrat (14, 54, 74, 75), l'étiquette étant conçue pour générer un champ électromagnétique associé ; et
un élément de reconnaissance d'analyte moléculaire (22, 44, 60, 80, 81) accouplé au substrat au moyen d'un groupe fonctionnel, d'un groupe terminal ou d'un brin moléculaire partiellement complémentaire, l'élément de reconnaissance d'analyte étant capable de se lier à un analyte cible ; le capteur étant **caractérisé par** l'inclusion de :
une entité d'amplification de signal (26, 46, 64, 84, 85, 90) liée ou fixée chimiquement à l'élément de reconnaissance d'analyte par l'intermédiaire d'un brin moléculaire ou directement à la surface de l'élément de reconnaissance d'analyte moléculaire, l'entité d'amplification de signal pouvant faciliter une modification du champ électromagnétique générable en présence de l'analyte cible,
l'entité d'amplification de signal comprenant une nanoparticule, un nanomarqueur, une particule de pérovskite, une particule métallique, une nanoparticule métallique, une particule de polymère, un point quantique, un nanodispositif ou leurs combinaisons.

2. Capteur radiofréquence selon la revendication 1, dans lequel l'entité d'amplification de signal (26, etc.) comprend un nanomarqueur et dans lequel la taille du nanomarqueur est dans une plage allant d'environ 0,1 nanomètre à environ 10 000 nanomètres.

3. Capteur radiofréquence selon la revendication 1, dans lequel l'entité d'amplification de signal (26, etc.) comprend une structure cœur-écorce.

4. Capteur radiofréquence selon la revendication 1, dans lequel une constante diélectrique de l'entité d'amplification de signal (26, etc.) est inférieure à environ 10 fois la constante diélectrique d'un moyen de détection.

5. Capteur radiofréquence selon la revendication 1, dans lequel une constante diélectrique de l'entité d'amplification de signal (26, etc.) est supérieure à environ 10 fois la constante diélectrique du moyen de détection.

6. Capteur radiofréquence selon la revendication 1, dans lequel l'élément de reconnaissance d'analyte (22, etc.) est un aptamère.

7. Capteur radiofréquence selon la revendication 1, dans lequel l'élément de reconnaissance d'analyte (22, etc.) est un élément conformationnel qui est conçu pour changer de forme lorsqu'il interagit avec un analyte cible.

8. Capteur radiofréquence selon la revendication 1, comprenant en outre :
une antenne (16) ;
une paire d'électrodes (20) disposées sur le substrat et en association fonctionnelle avec l'antenne et dans lequel la paire d'électrodes délimite une région de détection (19) ;
l'élément de reconnaissance d'analyte étant disposé en cours d'utilisation dans le champ électromagnétique de la paire d'électrodes et pouvant produire des signaux électriques représentatifs d'un analyte cible qui se lie à l'élément de reconnaissance d'analyte.

9. Capteur radiofréquence selon la revendication 8, dans lequel la région de détection comprend un matériau de détection sous la forme de l'élément de reconnaissance d'analyte.

10. Système de détection, comprenant :
une unité de distribution d'échantillons permettant de distribuer un échantillon ;
un capteur radiofréquence selon l'une quelconque des revendications 1 à 9 permettant de produire un signal électrique en réponse à un événement de liaison d'un analyte présent dans l'échantillon ; et
un dispositif d'affichage permettant d'afficher le signal électrique.
